# EUROPEAN PATENT SPECIFICATION

(11) **EP 4 506 546 B1**
(45) Date of publication and mention of the grant of the patent: **16.09.2026**
(21) Application number: 24193013.0
(22) Date of filing: 06.08.2024
(51) Int. Cl.: F01P 3/02, F01P 3/20, F01P 7/16, F01P 11/04, F01P 11/16

(54) **INSTALLATION STRUCTURE OF WATER TEMPERATURE SENSOR**
INSTALLATIONSSTRUKTUR FÜR EINEN WASSERTEMPERATURSENSOR
STRUCTURE D'INSTALLATION DE CAPTEUR DE TEMPÉRATURE D'EAU

(30) Priority: 08.08.2023 JP 2023129341
(43) Date of publication of application: 12.02.2025
(73) Proprietor: Suzuki Motor Corporation, Shizuoka 432-8611 (JP)
(72) Inventor: YAMADA, Shinichi, Shizuoka (JP); TAKASHIBA, Yasuto, Shizuoka (JP); NINOMIYA, Yoshinari, Shizuoka (JP)
(74) Representative: Haseltine Lake Kempner LLP

(56) References cited:
- DE-A1- 4 027 197
- DE-B4- 19 724 249
- JP-B2- 5 140 529
- US-A1- 2005 042 949
- US-A1- 2012 312 257

## Description

### TECHNICAL FIELD

The present disclosure relates to an installation structure of a water temperature sensor.

### BACKGROUND ART

In an engine, a circulation flow passage is generally formed. In the circulation flow passage, cooling water from a water pump returns to the water pump via a water jacket in a cylinder and a radiator. A water temperature sensor is attached to the engine, and the temperature of the cooling water in the water jacket is detected by the water temperature sensor. The detection temperature of the water temperature sensor is output to the electronic control unit, and various types of processing such as fuel injection processing and ignition processing are controlled. As an example of a straddle-type vehicle including this type of engine, Patent Literature 1 proposes a vehicle in which a water temperature sensor is attached to the rear surface of the cylinder head on the intake side. Patent Literature 2 discloses a cylinder head including an integrated exhaust manifold and which is coupled to a cylinder block of an engine.
Patent Literature 1: JP5140529B2
Patent Literature 2: US 2012/312257 A1

### SUMMARY OF INVENTION

In the model disclosed in Patent Literature 1, the rear of the cylinder head is surrounded by the vehicle body frame and is narrowed, and an intake component or the like is also provided inside the vehicle body frame. Therefore, if the priority is given to the layout of the intake component or the like, the attachability of the water temperature sensor deteriorates. In order to meet the exhaust gas regulation and the improvement in fuel efficiency in recent years, further improvement in sensing accuracy of the water temperature sensor is required.

The present disclosure has been made in view of the above points, and the object of the present disclosure is to provide an installation structure of a water temperature sensor that can improve the attachability of the water temperature sensor and the sensing accuracy.

One aspect of the present disclosure provides an installation structure of a water temperature sensor as defined in claim 1.

According to the installation structure of the water temperature sensor in one aspect of the present disclosure, the water temperature sensor is provided in a wide space in front of the cylinder head, and the attachability of the water temperature sensor to the cylinder head is improved. Since high heat from the exhaust port is transferred to the cooling water at a location adj acent to the outlet of the exhaust port, convection of the cooling water occurs around the water temperature sensor at an early stage, and the sensing accuracy during cold engine startup is improved.

### BRIEF DESCRIPTION OF DRAWINGS

The present disclosure will be described in detail based on the following without being limited thereto, wherein:
FIG. 1 is a right side view of a straddle-type vehicle according to the present embodiment;
FIG. 2 is a right side view of the periphery of an engine according to the present embodiment;
FIG. 3 is a front view of the periphery of the engine according to the present embodiment;
FIG. 4 is a perspective view of the periphery of the engine from which a radiator according to the present embodiment is removed;
FIG. 5 is a front view of the periphery of the engine from which the radiator according to the present embodiment is removed;
FIG. 6 is a front view of the upper portion of the engine according to the present embodiment;
FIG. 7 is a cross-sectional view of the upper portion of the engine taken along a line A-A in FIG. 6; and
FIG. 8 is a cross-sectional view of the upper portion of the engine taken along a line B-B in FIG. 6.

### DESCRIPTION OF EMBODIMENTS

A water temperature sensor according to an aspect of the present disclosure is configured to detect a temperature of cooling water in an engine. An outlet of an exhaust port is opened in a front surface of a cylinder head of the engine, and the water temperature sensor is provided at a location adj acent to the outlet of the exhaust port in a front view. Since the water temperature sensor is provided in a wide space in front of the cylinder head, the attachability of the water temperature sensor to the cylinder head is improved. Since high heat from the exhaust port is transferred to the cooling water at the location adjacent to the outlet of the exhaust port, convection of the cooling water occurs around the water temperature sensor at an early stage, and the sensing accuracy during cold engine startup is improved.

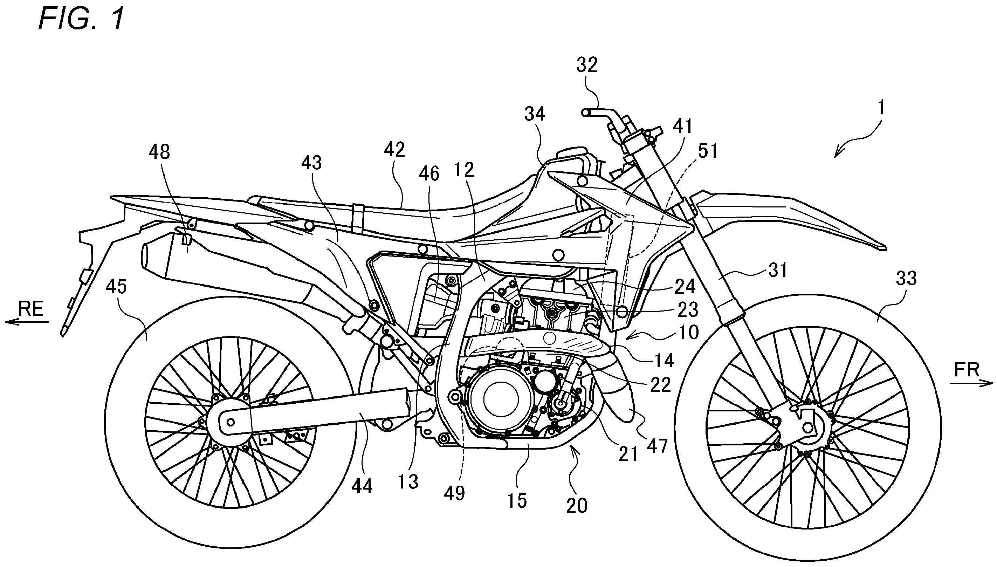

Hereinafter, a straddle-type vehicle according to the present embodiment will be described with reference to the accompanying drawings. FIG. 1 is a right side view of the straddle-type vehicle according to the present embodiment. In the following drawings, an arrow Fr indicates a vehicle front side, an arrow Re indicates a vehicle rear side, an arrow L indicates a vehicle left side, and an arrow R indicates a vehicle right side.

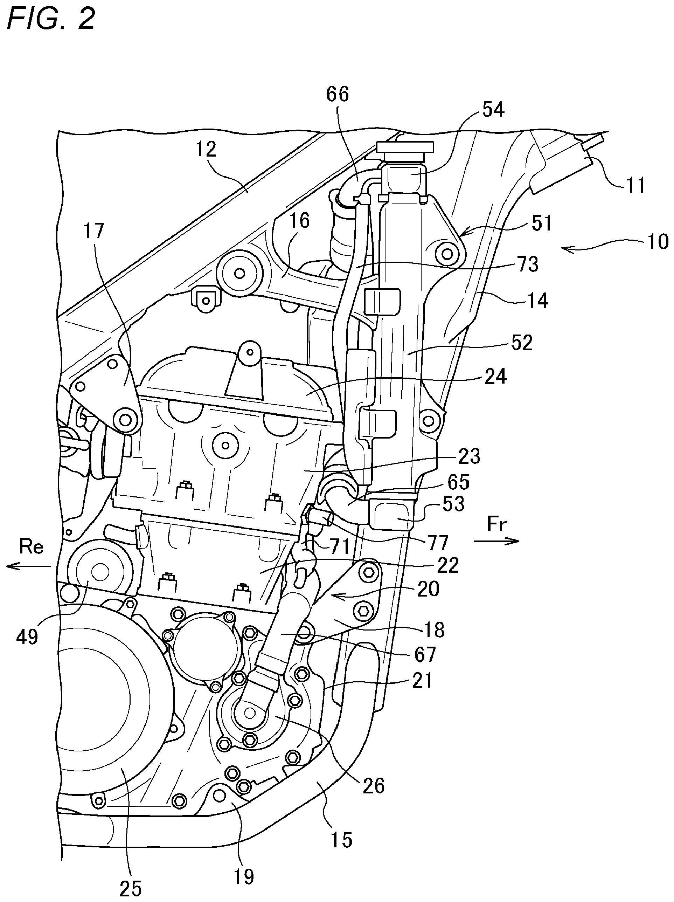

As shown in FIG. 1, a straddle-type vehicle 1 is implemented by mounting various components such as an engine 20 and an electrical system on a vehicle body frame 10. A pair of main frames 12 extend obliquely rearward and downward from a head pipe 11 (see FIG. 2) of the vehicle body frame 10, and the rear portions of the pair of main frames 12 form a pair of body frames 13 bent downward. A down frame 14 extends downward from the head pipe 11, and a pair of under frames 15 bent rearward are connected to the lower portion of the down frame 14. The rear end portions of the pair of under frames 15 are connected to the lower portions of the pair of body frames 13, and the vehicle body frame 10 is formed in a cradle shape.

A front fork 31 is supported on the head pipe 11 via a steering shaft (not shown) so as to be steerable. A handlebar 32 is provided on the upper portion of the front fork 31, and a front wheel 33 is rotatably supported on the lower portion of the front fork 31. A fuel tank 34 is placed over the upper portions of the pair of main frames 12, and the main frames 12 and the fuel tank 34 are covered by front side covers 41 from the lateral sides. A seat 42 is provided behind the fuel tank 34, and a seat frame supporting the seat 42 from below is covered from the lateral sides by rear side covers 43.

A swing arm 44 is supported on the body frame 13 so as to be swingable. The swing arm 44 extends rearward from the body frame 13, and a rear wheel 45 is rotatably supported at the rear end of the swing arm 44. The engine 20 is a four-stroke single-cylinder engine, and is suspended inside the vehicle body frame 10 via a plurality of suspension brackets. A cylinder assembly in which a cylinder 22, a cylinder head 23, and a cylinder head cover 24 are stacked is attached to the upper portion of a crankcase 21 of the engine 20. An air cleaner 46, a starter motor 49, and the like are provided behind the cylinder head 23.

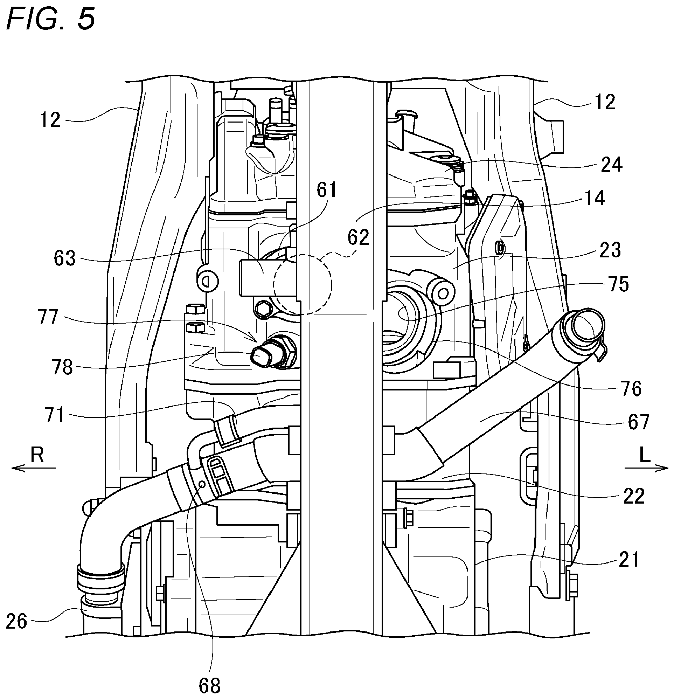

In the straddle-type vehicle 1 according to the present embodiment, left and right radiators 51 and 56 (only the radiator 51 is shown in FIG. 1) are provided in front of the cylinder head 23, and cooling water is circulated between the engine 20 and the radiators 51 and 56. The temperature of the cooling water in the engine 20 is detected by a water temperature sensor 77 (see FIG. 5), and the detection temperature of the water temperature sensor 77 is used for various controls such as fuel injection processing. In recent years, in order to regulate the exhaust gas and improve the fuel efficiency, high sensing accuracy of the water temperature sensor 77 is required. Therefore, in consideration of not only the layout of the peripheral components of the engine 20 but also the sensing accuracy of the water temperature sensor 77, the installation location of the water temperature sensor 77 with respect to the engine 20 has been studied.

As described above, the air cleaner 46 and the starter motor 49 are provided behind the cylinder head 23. Therefore, when the water temperature sensor 77 is provided behind the cylinder head 23, the attachability of the water temperature sensor 77 deteriorates due to the air cleaner 46, the starter motor 49, and the like. When the water temperature sensor 77 is provided on the side surface of the engine 20, the water temperature sensor 77 may be damaged when the vehicle falls over. Since the water temperature sensor 77 is separated from an exhaust port 75 in any installation place, the sensing performance during cold engine startup is not high. Therefore, in the present embodiment, the water temperature sensor 77 is provided at a location adjacent to an outlet 76 (see FIG. 5) of the exhaust port 75 having a relatively large space.

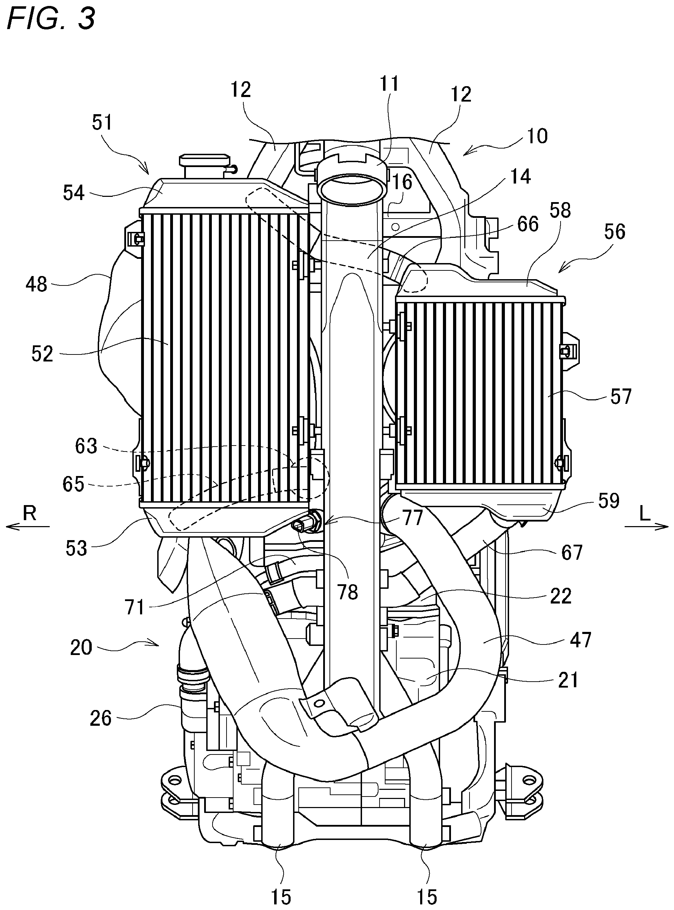

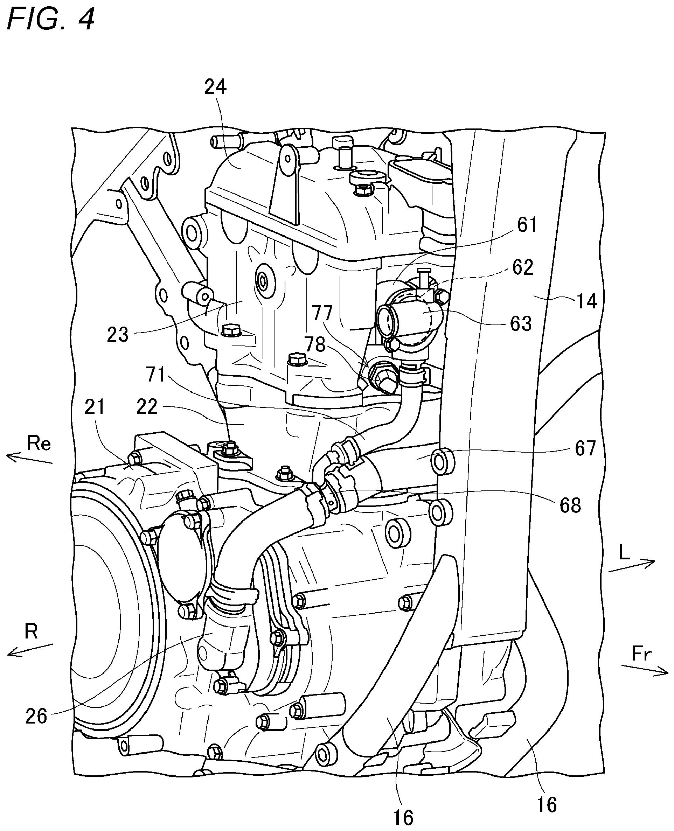

The installation structure of the water temperature sensor will be described with reference to FIGS. 2 to 5. FIG. 2 is a right side view of the periphery of the engine according to the present embodiment. FIG. 3 is a front view of the periphery of the engine according to the present embodiment. FIG. 4 is a perspective view of the periphery of the engine from which a radiator according to the present embodiment is removed. FIG. 5 is a front view of the periphery of the engine from which the radiator according to the present embodiment is removed. In FIGS. 2, 4, and 5, the exhaust pipe is omitted.

As shown in FIG. 2, the pair of main frames 12 and the down frame 14 are connected to each other via bridge tubes 16 for reinforcement at the upper portion of the vehicle body frame 10. Below the bridge tubes 16, the cylinder head 23 at the upper portion of the engine 20 and the crankcase 21 at the lower portion of the engine 20 are suspended from the vehicle body frame 10 by suspension brackets 17 to 19. The cylinder 22 is provided on the crankcase 21, and the cylinder head 23 is provided on the cylinder 22. The cylinder head cover 24 is provided on the cylinder head 23, and a DOHC type valve train is stored inside the cylinder head 23 and the cylinder head cover 24.

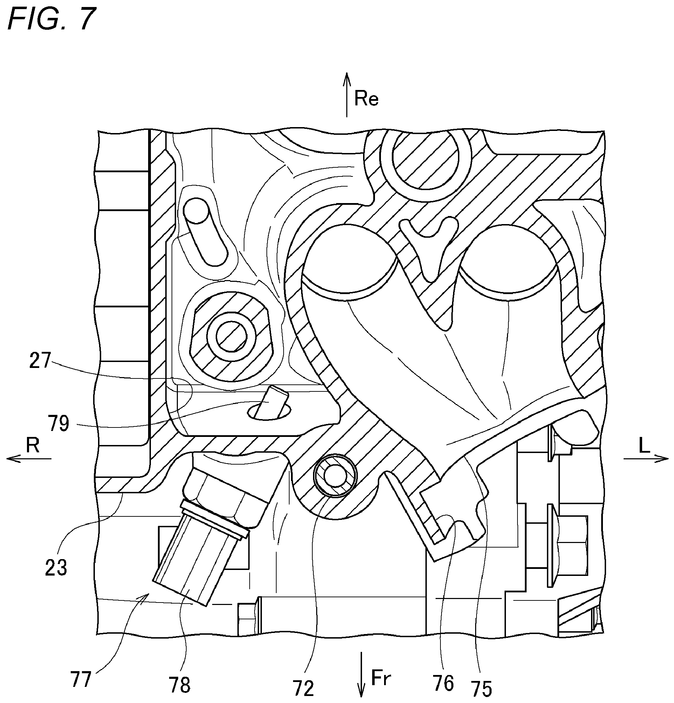

A clutch cover 25 that covers a clutch (not shown) from the lateral side is attached to the right side surface of the crankcase 21. The starter motor 49 that starts the engine 20 is provided above the clutch cover 25. A water pump 26 that feeds cooling water to the engine 20 is provided in front of the clutch cover 25. The discharge port of the water pump 26 is connected to a water jacket 27 (see FIG. 7) in the cylinder 22 and the cylinder head 23 via a cooling flow passage in the crankcase 21. The water temperature sensor 77 that detects the temperature of the cooling water in the water jacket 27 is provided on the front surface of the cylinder head 23.

As shown in FIGS. 2 and 3, the right radiator 51 and the left radiator 56 are provided in front of the cylinder head 23 with the down frame 14 at the center of the vehicle interposed therebetween. The right radiator 51 is formed larger than the left radiator 56. In the right radiator 51, a right inlet tank 53 is provided at the lower portion of a right radiator core 52, and a right outlet tank 54 is provided at the upper portion of the right radiator core 52. In the left radiator 56, a left inlet tank 58 is provided at the upper portion of a left radiator core 57, and a left outlet tank 59 is provided at the lower portion of the left radiator core 57.

A cylindrical thermostat case 61 (see FIG. 4) is formed in the front surface of the engine 20, and a thermostat 62 (see FIG. 4) is provided in the thermostat case 61. A thermostat cover 63 is provided in the thermostat case 61, and the thermostat 62 is covered by the thermostat cover 63. The right inlet tank 53 is connected to the thermostat cover 63 via an inlet hose 65. The right outlet tank 54 and the left inlet tank 58 are connected to each other via an inter-radiator hose 66. The left outlet tank 59 is connected to the water pump 26 via an outlet hose 67.

In the right radiator 51, the cooling water flows upward from the right inlet tank 53 toward the right outlet tank 54, and while the cooling water passes through the right radiator core 52, the heat of the cooling water is radiated into the air. The cooling water is sent from the right outlet tank 54 to the left inlet tank 58 through the inter-radiator hose 66. In the left radiator 56, the cooling water flows downward from the left inlet tank 58 toward the left outlet tank 59, and while the cooling water passes through the left radiator core 57, the heat of the cooling water is radiated into the air. The heat of the cooling water is radiated in two stages by the right radiator 51 and the left radiator 56, and the cooling efficiency is improved.

A three-way pipe 68 (see FIG. 4) is provided in the middle of the outlet hose 67, and the thermostat case 61 is connected to the branch pipe of the three-way pipe 68 via a bypass hose 71. A bypass path is formed by the bypass hose 71 to return cooling water from the thermostat case 61 to the water pump 26 while bypassing the right radiator 51 and the left radiator 56. The upper portion of the thermostat cover 63 is connected to the right outlet tank 54 via an air vent hose 73. In the side view, the inlet hose 65, the outlet hose 67, the bypass hose 71, and the air vent hose 73 are located between the engine 20 and the down frame 14.

The thermostat 62 controls the flow of the cooling water according to the temperature of the cooling water at the outlet of the thermostat case 61 (the engine 20). When the detection temperature is lower than the predetermined temperature, the thermostat 62 is closed, and the flow of the cooling water from the engine 20 toward the right radiator 51 is blocked at the outlet of the thermostat case 61. The cooling water is returned from the thermostat case 61 to the water pump 26 through the bypass hose 71. When the detection temperature rises to a predetermined temperature or higher, the thermostat 62 opens, and the cooling water flows from the thermostat case 61 to the right radiator 51 and the left radiator 56 to effectively cool the engine 20.

The exhaust port 75 (see FIG. 5) is formed in the center of the front surface of the cylinder head 23, and an exhaust pipe 47 is connected to the exhaust port 75. The exhaust pipe 47 extends obliquely downward to the left from the exhaust port 75 in a manner of avoiding the down frame 14, passes through the front of the under frame 15, and curves obliquely upward to the right. The exhaust pipe 47 is largely curved using the space in front of the vehicle body, so that the radius of curvature of the curved portion of the exhaust pipe 47 becomes large, and the exhaust resistance is reduced. The exhaust pipe 47 extends rearward through the right side of the cylinder 22, and the rear end of the exhaust pipe 47 is connected to a muffler 48 near the seat 42.

The water temperature sensor 77 is provided at a location adjacent to the exhaust port 75. The water temperature sensor 77 is located below the inlet hose 65 in the front view, and the water temperature sensor 77 is located behind the down frame 14 in the side view. The water temperature sensor 77 is located at the same height as that of the trapezoidal right inlet tank 53 of the right radiator 51, and a part of a terminal portion 78 of the water temperature sensor 77 is partially covered by the right inlet tank 53 in the front view. The water temperature sensor 77 is partially covered by the right radiator 51 from the front, so that the water temperature sensor 77 is protected from the flying stone, the mud splash, and the like that are splashed up by the front wheel 33 (see FIG. 1).

As shown in FIGS. 4 and 5, the thermostat cover 63 and the water temperature sensor 77 are provided on the right side of the down frame 14, and the outlet 76 of the exhaust port 75 is formed on the left side of the down frame 14. The joint pipe of the thermostat cover 63 is directed to the right side, the terminal portion 78 of the water temperature sensor 77 is directed obliquely forward to the right, and the outlet 76 of the exhaust port 75 is directed obliquely forward to the left. The terminal portion 78 of the water temperature sensor 77 protrudes from the down frame 14, and the water temperature sensor 77 is attached without interfering with the down frame 14. Even when the water temperature sensor 77 is provided on the front surface of the cylinder head 23, a gap between the water temperature sensor 77 and the down frame 14 is ensured, and an increase in size of the vehicle is prevented.

The outlet 76 of the exhaust port 75 and the water temperature sensor 77 are inclined forward in a manner of being separated from each other in the left-right direction (the engine width direction). A detection end 79 (see FIG. 7) of the water temperature sensor 77 located in the cylinder head 23 is brought close to the outlet 76 of the exhaust port 75, and the detection end 79 of the water temperature sensor 77 is directed to a place where the temperature changes rapidly, thereby improving the sensing accuracy. On the other hand, although the terminal portion 78 of the water temperature sensor 77 protruding out of the cylinder head 23 is susceptible to heat, the terminal portion 78 of the water temperature sensor 77 is separated from the outlet 76 of the exhaust port 75 to reduce the heat damage. Since the attaching direction of the water temperature sensor 77 does not interfere with the exhaust port 75, the attachability of the water temperature sensor 77 is improved.

The thermostat 62 is provided inside the thermostat cover 63, and the thermostat 62 is adjacent to the lateral side of the outlet 76 of the exhaust port 75. Regardless of whether the thermostat 62 is open or closed, the main flow of the cooling water is formed near the thermostat 62. The water temperature sensor 77 is provided below the thermostat 62, and the water temperature sensor 77 detects the temperature of the cooling water flowing toward the thermostat 62 in the water jacket 27. The water temperature sensor 77 is positioned near the outlet 76 of the exhaust port 75 and near the main flow of the cooling water, so that the sensing accuracy of the water temperature sensor 77 is improved.

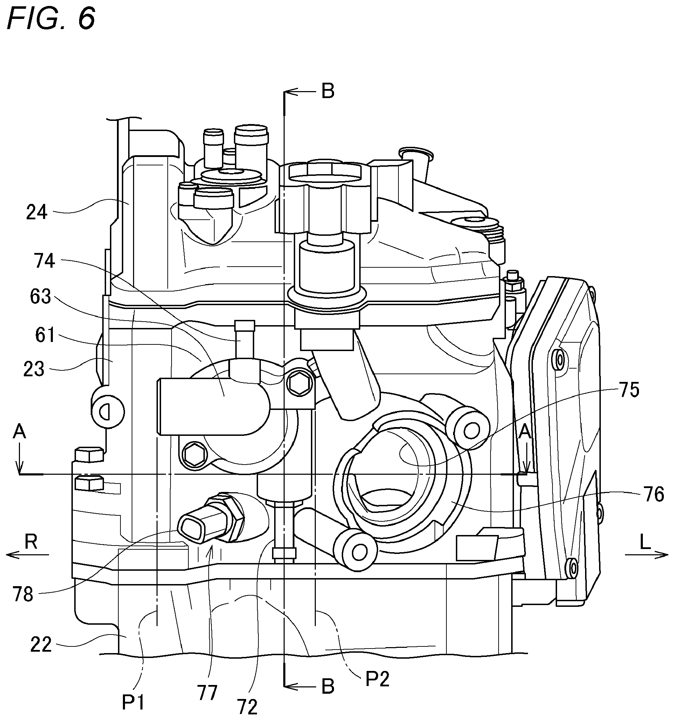

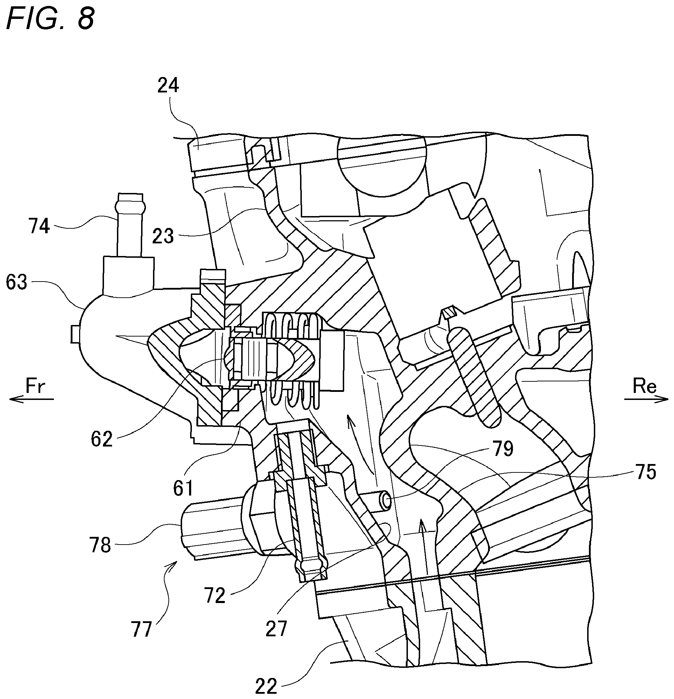

The layout of the water temperature sensor will be described in detail with reference to FIGS. 6 to 8. FIG. 6 is a front view of the upper portion of the engine according to the present embodiment. FIG. 7 is a cross-sectional view of the upper portion of the engine taken along a line A-A in FIG. 6. FIG. 8 is a cross-sectional view of the upper portion of the engine taken along a line B-B in FIG. 6.

As shown in FIG. 6, the outlet 76 of the exhaust port 75, the thermostat cover 63, the water temperature sensor 77, an air vent union 74, and a bypass union 72 are provided in the center of the front surface of the cylinder head 23. The air vent union 74 is located above the thermostat cover 63, the water temperature sensor 77 is located below the thermostat cover 63, and the bypass union 72 is located between the water temperature sensor 77 and the outlet 76 of the exhaust port 75. The air vent hose 73 (see FIG. 2) is connected to the air vent union 74, a cable (not shown) is connected to the terminal portion 78 of the water temperature sensor 77, and the bypass hose 71 (see FIG. 4) is connected to the bypass union 72.

According to such a layout of the water temperature sensor 77 and the bypass union 72, even when the bypass union 72 is located near the water temperature sensor 77, the attachability of the water temperature sensor 77 is not impaired. The terminal portion 78 of the water temperature sensor 77 protrudes obliquely forward to the right, and the bypass union 72 protrudes downward. The installation direction of the water temperature sensor 77 and the installation direction of the bypass union 72 with respect to the cylinder head 23 intersect. Therefore, even when the cable is connected to the terminal portion 78 of the water temperature sensor 77 and the bypass hose 71 is connected to the bypass union 72, the cable for the water temperature sensor 77 and the bypass hose 71 are not tangled.

The water temperature sensor 77 and the bypass union 72 are located between (i.e., inside a region between) both end positions P1 and P2 of the thermostat cover 63 in the left-right direction (the engine width direction). The thermostat 62 is located at the same height as that of the upper half portion of the outlet 76 of the exhaust port 75, and the water temperature sensor 77 and the bypass union 72 are located at the same height as that of the lower half portion of the outlet 76 of the exhaust port 75. With such an arrangement, the thermostat cover 63, the water temperature sensor 77, the bypass union 72, and the outlet 76 of the exhaust port 75 are compactly provided on the front surface of the cylinder head 23. The same height is not necessarily completely the same height, but may be approximately the same height.

As shown in FIGS. 7 and 8, the water jacket 27 is formed in the cylinder head 23, and the flow passage of cooling water is formed from the lower portion of the cylinder head 23 toward the thermostat case 61 by the water jacket 27. The thermostat 62 is provided at the outlet of the thermostat case 61, and the bypass union 72 is provided on the lower surface of the thermostat case 61 upstream of the thermostat 62. When the thermostat 62 is closed, the cooling water flows from the water jacket 27 to the bypass union 72, and the cooling water bypasses the right radiator 51 and the left radiator 56 and is returned to the engine 20 (see FIG. 3).

At this time, the inlet of the cooling water to the bypass union 72 is located above the water temperature sensor 77. The cooling water in the bypass union 72 is pulled. Accordingly, the flow of the cooling water is formed such that the cooling water that received heat from the engine 20 does not stagnate and actively comes into contact with the thermostat 62. The thermostat 62 can be opened with a small time lag after the temperature of the cooling water rises to the predetermined temperature or higher. When the thermostat 62 is opened, the cooling water flows from the water jacket 27 to the thermostat cover 63, and the cooling water is returned to the engine 20 via the right radiator 51 and the left radiator 56.

The detection end 79 of the water temperature sensor 77 protrudes into the water jacket 27. The water temperature sensor 77 is provided obliquely with respect to the cylinder head 23 such that the detection end 79 of the water temperature sensor 77 faces the exhaust port 75. At this time, the detection end 79 of the water temperature sensor 77 is closer to the exhaust port 75 than is the thermostat 62. The sensing accuracy is improved by directing the detection end 79 of the water temperature sensor 77 toward the exhaust port 75, where the temperature changes rapidly. As described above, the thermostat 62 is smoothly opened, so that the temperature of the cooling water that reflects the route change is detected by the water temperature sensor 77, and the delay in sensing is reduced.

As described above, according to the installation structure of the water temperature sensor 77 in the present embodiment, the water temperature sensor 77 is provided in a wide space in front of the cylinder head 23, and the attachability of the water temperature sensor 77 to the cylinder head 23 is improved. Since high heat from the exhaust port 75 is transferred to the cooling water at a location adjacent to the outlet 76 of the exhaust port 75, convection of the cooling water occurs around the water temperature sensor 77 at an early stage, and the sensing accuracy during cold engine startup is improved.

In the present embodiment, the water temperature sensor is provided on the right side of the outlet of the exhaust port. However, the water temperature sensor only needs to be provided at a location adj acent to the outlet of the exhaust port, and the water temperature sensor may be provided above, below, or on the left side of the outlet of the exhaust port.

In the present embodiment, the water temperature sensor is provided below the thermostat at a location adjacent to the outlet of the exhaust port in the front view. Alternatively, the water temperature sensor may be provided above the thermostat.

In the present embodiment, the water temperature sensor is inclined obliquely rightward toward the front side, and the outlet of the exhaust port is inclined obliquely leftward toward the front side. However, it is sufficient that the water temperature sensor and the outlet of the exhaust port are inclined to be separated from each other in the engine width direction toward the front side. For example, the water temperature sensor may be inclined obliquely upward toward the front side, and the outlet of the exhaust port may be inclined obliquely downward toward the front side.

In the present embodiment, the bypass union is located between the water temperature sensor and the outlet of the exhaust port. However, the position of the bypass union is not particularly limited as long as the position does not interfere with the attachability of the water temperature sensor. It is sufficient that the bypass union is provided at a location adjacent to the outlet of the exhaust port.

In the present embodiment, the vehicle body frame is exemplified in which the down frame extends downward from the head pipe, but the structure of the vehicle body frame is not particularly limited.

The installation structure of the water temperature sensor according to the present embodiment is not limited to the off road type straddle-type vehicle described above, and may be used in other types of straddle-type vehicles. The straddle-type vehicle is not limited to a general vehicle in which the driver rides on the seat in a posture of straddling the seat, and includes a scooter-type vehicle in which the driver rides on the seat without straddling the seat.

As described above, the first aspect is an installation structure of a water temperature sensor (77) capable of detecting a temperature of cooling water in an engine (20), in which an outlet (76) of an exhaust port (75) is opened in a front surface of a cylinder head (23) of the engine, and in which the water temperature sensor is provided at a location adjacent to the outlet of the exhaust port in a front view. According to this configuration, the water temperature sensor is provided in a wide space in front of the cylinder head, and the attachability of the water temperature sensor to the cylinder head is improved. Since high heat from the exhaust port is transferred to the cooling water at a location adjacent to the outlet of the exhaust port, convection of the cooling water occurs around the water temperature sensor at an early stage, and the sensing accuracy during cold engine startup is improved.

A second aspect is directed to the first aspect, in which the outlet of the exhaust port and the water temperature sensor are inclined to be separated from each other in an engine width direction toward a front side. According to this configuration, the detection end of the water temperature sensor in the cylinder head is brought close to the outlet of the exhaust port, and the detection end of the water temperature sensor is directed to a place where the temperature changes rapidly, thereby improving the sensing accuracy. On the other hand, although the terminal portion of the water temperature sensor outside the cylinder head is susceptible to heat, the terminal portion of the water temperature sensor is separated from the outlet of the exhaust port to reduce the heat damage. Since the attaching direction of the water temperature sensor does not interfere with the exhaust port, the attachability of the water temperature sensor is improved.

A third aspect is directed to the first aspect and the second aspect, in which a thermostat (62) is provided adjacent to a lateral side of the outlet of the exhaust port, and in which the water temperature sensor is provided above or below the thermostat at the location adjacent to the outlet of the exhaust port in the front view. According to this configuration, the detection end of the water temperature sensor is positioned near the main flow of the cooling water, and the sensing accuracy is improved.

A fourth aspect is directed to the third aspect, in which the thermostat is covered with a thermostat cover (63), and in which the water temperature sensor is located between both end positions of the thermostat cover in an engine width direction. According to this configuration, the thermostat cover and the water temperature sensor are compactly provided on the front surface of the cylinder head.

A fifth aspect is directed to the third aspect or the fourth aspect, in which the thermostat has a same height as that of an upper half portion of the outlet of the exhaust port, and in which the water temperature sensor has a same height as that of a lower half portion of the outlet of the exhaust port. According to this configuration, the outlet of the exhaust port, the thermostat cover, and the water temperature sensor are compactly provided on the front surface of the cylinder head.

According to the invention, a radiator (a right radiator 51) is provided on a front side of the cylinder head, and the water temperature sensor is covered with the radiator from the front side. According to this configuration, the water temperature sensor is protected from the flying stone, the mud splash, and the like that are splashed up by the front wheel.

A sixth aspect is directed to any one of the first aspect to the fifth aspect, in which a down frame (14) extends from a head pipe (11) toward a lower side of a vehicle, and in which a terminal portion (78) of the water temperature sensor on a distal end side thereof protrudes from the down frame in the front view. According to this configuration, the water temperature sensor is attached without interfering with the down frame. Even when the water temperature sensor is provided on the front surface of the cylinder head, a gap between the water temperature sensor and the down frame is ensured, and an increase in size of the vehicle is prevented.

A seventh aspect is directed to any one of the first aspect to the sixth aspect, in which a radiator is provided on a front side of the cylinder head, in which a thermostat is provided adjacent to a lateral side of the outlet of the exhaust port, in which a bypass passage (a bypass union 72) is provided below the thermostat and configured to return the cooling water to the engine while bypassing the radiator when the thermostat is closed, and in which the water temperature sensor is provided below the thermostat at the location adjacent to the outlet of the exhaust port in the front view, and the bypass passage is located between the water temperature sensor and the outlet of the exhaust port. According to this configuration, even when the thermostat is closed, the cooling water is circulated through the bypass passage. Even when the bypass passage is located near the water temperature sensor, the attachability of the water temperature sensor is not impaired.

An eighth aspect is directed to any one of the first aspect to the seventh aspect, in which a radiator is provided on a front side of the cylinder head, in which a thermostat is provided adjacent to a lateral side of the outlet of the exhaust port, in which a bypass passage is provided below the thermostat and configured to return the cooling water to the engine while bypassing the radiator when the thermostat is closed, and in which the water temperature sensor is provided below the thermostat at the location adjacent to the outlet of the exhaust port in the front view, and an inlet of the cooling water to the bypass passage is located above the water temperature sensor. According to this configuration, even when the thermostat is closed, the cooling water is circulated through the bypass passage. The cooling water in the bypass passage is pulled. Accordingly, the flow of the cooling water is formed such that the cooling water that received heat from the engine does not stagnate and actively comes into contact with the thermostat. Since the thermostat can be opened with a small time lag after the cooling water rises to a predetermined temperature or higher, the temperature of the cooling water that reflects the route change is detected by the water temperature sensor, and the delay in sensing is reduced.

Although the present embodiment has been described, a part or all of the embodiment and modifications described above may be combined as another embodiment.

The technique according to the present disclosure is not limited to the embodiment described above, and may be variously changed, replaced, or modified without departing from the scope of the invention as defined by the appended claims. Further, the present disclosure may be implemented by other methods as long as the technical concept can be implemented by the methods through advance of the technique or other derivative techniques. Therefore, the claims cover all embodiments that may fall within the scope of the technical concept.

## Claims

1. An installation structure of a water temperature sensor (77), the installation structure comprising a radiator (51) and an engine (20) having a cylinder head (23), the water temperature sensor (77) being configured to detect a temperature of cooling water in the engine (20),
wherein an outlet (76) of an exhaust port (75) is opened in a front surface of the cylinder head (23) of the engine (20),
wherein the water temperature sensor (77) is provided at a location adjacent to the outlet (76) of the exhaust port (75) in a front view,
**characterised in that** the
radiator (51) is provided on a front side of the cylinder head (23), and
**in that** the water temperature sensor (77) is covered with the radiator (51) from the front side.

2. The installation structure of the water temperature sensor (77) according to claim 1,
wherein the outlet (76) of the exhaust port (75) and the water temperature sensor (77) are inclined to be separated from each other in an engine width direction toward a front side.

3. The installation structure of the water temperature sensor (77) according to claim 1 or 2,
wherein a thermostat (62) is provided adjacent to a lateral side of the outlet (76) of the exhaust port (75), and
wherein the water temperature sensor (77) is provided above or below the thermostat (62) at the location adjacent to the outlet (76) of the exhaust port (75) in the front view.

4. The installation structure of the water temperature sensor (77) according to claim 3,
wherein the thermostat (62) is covered with a thermostat cover (63), and
wherein the water temperature sensor (77) is located between both end positions of the thermostat cover (63) in an engine width direction.

5. The installation structure of the water temperature sensor (77) according to claim 3,
wherein the thermostat (62) has a same height as that of an upper half portion of the outlet (76) of the exhaust port (75), and
wherein the water temperature sensor (77) has a same height as that of a lower half portion of the outlet (76) of the exhaust port (75).

6. The installation structure of the water temperature sensor (77) according to claim 1 or 2,
further comprising a down frame (14) configured for extending from a head pipe (11) toward a lower side of a vehicle (1), and
wherein a terminal portion (78) of the water temperature sensor (77) on a distal end side thereof protrudes from the down frame (14) in the front view.

7. The installation structure of the water temperature sensor (77) according to claim 1 or 2,
wherein a thermostat (62) is provided adjacent to a lateral side of the outlet (76) of the exhaust port (75),
wherein a bypass passage (72) is provided below the thermostat (62) and configured to return the cooling water to the engine (20) while bypassing the radiator (51) when the thermostat (62) is closed, and
wherein the water temperature sensor (77) is provided below the thermostat (62) at the location adjacent to the outlet (76) of the exhaust port (75) in the front view, and the bypass passage (72) is located between the water temperature sensor (77) and the outlet (76) of the exhaust port (75).

8. The installation structure of the water temperature sensor (77) according to claim 1 or 2,
wherein a thermostat (62) is provided adjacent to a lateral side of the outlet (76) of the exhaust port (75),
wherein a bypass passage (72) is provided below the thermostat (62) and configured to return the cooling water to the engine (20) while bypassing the radiator (51) when the thermostat (62) is closed, and
wherein the water temperature sensor (77) is provided below the thermostat (62) at the location adjacent to the outlet (76) of the exhaust port (75) in the front view, and an inlet of the cooling water to the bypass passage (72) is located above the water temperature sensor (77).

## Patentansprüche

1. Installationsstruktur eines Wassertemperatursensors (77), wobei die Installationsstruktur einen Kühler (51) und einen Motor (20) mit einem Zylinderkopf (23) umfasst, wobei der Wassertemperatursensor (77) konfiguriert ist, eine Temperatur von Kühlwasser in dem Motor (20) zu detektieren,
wobei ein Auslass (76) einer Abgasöffnung (75) in einer vorderen Oberfläche des Zylinderkopfs (23) des Motors (20) geöffnet ist, wobei der Wassertemperatursensor (77) in einer Vorderansicht an einer Position benachbart zu dem Auslass (76) der Abgasöffnung (75) bereitgestellt ist,
**dadurch gekennzeichnet, dass**
der Kühler (51) an einer vorderen Seite des Zylinderkopfs (23) bereitgestellt ist, und
der Wassertemperatursensor (77) von der vorderen Seite mit dem Kühler (51) abgedeckt ist.

2. Installationsstruktur des Wassertemperatursensors (77) nach Anspruch 1,
wobei der Auslass (76) der Abgasöffnung (75) und der Wassertemperatursensor (77) geneigt sind, um in einer Motorbreitenrichtung zu einer vorderen Seite hin voneinander getrennt zu sein.

3. Installationsstruktur des Wassertemperatursensors (77) nach Anspruch 1 oder 2,
wobei ein Thermostat (62) benachbart zu einer lateralen Seite des Auslasses (76) der Abgasöffnung (75) bereitgestellt ist, und wobei der Wassertemperatursensor (77) in der Vorderansicht oberhalb oder unterhalb des Thermostats (62) an der Position benachbart zu dem Auslass (76) der Abgasöffnung (75) bereitgestellt ist.

4. Installationsstruktur des Wassertemperatursensors (77) nach Anspruch 3,
wobei das Thermostat (62) mit einer Thermostatabdeckung (63) abgedeckt ist, und
wobei sich der Wassertemperatursensor (77) zwischen beiden Endpositionen der Thermostatabdeckung (63) in einer Motorbreitenrichtung befindet.

5. Installationsstruktur des Wassertemperatursensors (77) nach Anspruch 3,
wobei das Thermostat (62) eine gleiche Höhe wie die eines oberen Halbabschnitts des Auslasses (76) der Abgasöffnung (75) aufweist, und
wobei der Wassertemperatursensor (77) eine gleiche Höhe wie die eines unteren Halbabschnitts des Auslasses (76) der Abgasöffnung (75) aufweist.

6. Installationsstruktur des Wassertemperatursensors (77) nach Anspruch 1 oder 2,
ferner umfassend einen Unterrahmen (14), der konfiguriert ist, sich von einem Kopfrohr (11) zu einer unteren Seite eines Fahrzeugs (1) hin zu erstrecken, und
wobei ein Anschlussabschnitt (78) des Wassertemperatursensors (77) an einer distalen Endseite davon in der Vorderansicht aus dem Unterrahmen (14) vorsteht.

7. Installationsstruktur des Wassertemperatursensors (77) nach Anspruch 1 oder 2,
wobei ein Thermostat (62) benachbart zu einer lateralen Seite des Auslasses (76) der Abgasöffnung (75) bereitgestellt ist,
wobei ein Umgehungsdurchlass (72) unterhalb des Thermostats (62) bereitgestellt ist und konfiguriert ist, das Kühlwasser unter Umgehen des Kühlers (51) zu dem Motor (20) zurückzuführen, wenn das Thermostat (62) geschlossen ist, und
wobei der Wassertemperatursensor (77) in der Vorderansicht unterhalb des Thermostats (62) an der Position benachbart zu dem Auslass (76) der Abgasöffnung (75) bereitgestellt ist und sich der Umgehungsdurchlass (72) zwischen dem Wassertemperatursensor (77) und dem Auslass (76) der Abgasöffnung (75) befindet.

8. Installationsstruktur des Wassertemperatursensors (77) nach Anspruch 1 oder 2,
wobei ein Thermostat (62) benachbart zu einer lateralen Seite des Auslasses (76) der Abgasöffnung (75) bereitgestellt ist,
wobei ein Umgehungsdurchlass (72) unterhalb des Thermostats (62) bereitgestellt ist und konfiguriert ist, das Kühlwasser unter Umgehen des Kühlers (51) zu dem Motor (20) zurückzuführen, wenn das Thermostat (62) geschlossen ist, und
wobei der Wassertemperatursensor (77) in der Vorderansicht unterhalb des Thermostats (62) an der Position benachbart zu dem Auslass (76) der Abgasöffnung (75) bereitgestellt ist und sich ein Einlass des Kühlwassers in den Umgehungsdurchlass (72) oberhalb des Wassertemperatursensors (77) befindet.

## Revendications

1. Structure d'installation d'un capteur de température d'eau (77), la structure d'installation comprenant un radiateur (51) et un moteur (20) doté d'une culasse de cylindre (23), le capteur de température d'eau (77) étant configuré pour détecter une température de l'eau de refroidissement dans le moteur (20),
dans laquelle une sortie (76) d'un orifice d'échappement (75) est ouverte dans une surface avant de la culasse de cylindre (23) du moteur (20),
dans laquelle le capteur de température d'eau (77) est disposé à un emplacement adjacent à la sortie (76) de l'orifice d'échappement (75) en vue de face,
**caractérisée en ce que** le radiateur (51) est disposé sur un côté avant de la culasse de cylindre (23), et **en ce que** le capteur de température d'eau (77) est recouvert par le radiateur (51) du côté avant.

2. Structure d'installation du capteur de température d'eau (77) selon la revendication 1,
dans laquelle la sortie (76) de l'orifice d'échappement (75) et le capteur de température d'eau (77) sont inclinés pour être séparés l'un de l'autre dans une direction de largeur de moteur vers un côté avant.

3. Structure d'installation du capteur de température d'eau (77) selon la revendication 1 ou 2,
dans laquelle un thermostat (62) est disposé adjacent à un côté latéral de la sortie (76) de l'orifice d'échappement (75), et
dans laquelle le capteur de température d'eau (77) est disposé au-dessus ou en dessous du thermostat (62) à l'emplacement adjacent à la sortie (76) de l'orifice d'échappement (75) en vue de face.

4. Structure d'installation du capteur de température d'eau (77) selon la revendication 3,
dans laquelle le thermostat (62) est recouvert d'un couvercle de thermostat (63), et
dans laquelle le capteur de température d'eau (77) est situé entre les deux positions d'extrémités du couvercle de thermostat (63) dans une direction de largeur de moteur.

5. Structure d'installation du capteur de température d'eau (77) selon la revendication 3,
dans laquelle le thermostat (62) a une même hauteur que celle d'une partie moitié supérieure de la sortie (76) de l'orifice d'échappement (75), et
dans laquelle le capteur de température d'eau (77) a une même hauteur que celle d'une partie moitié inférieure de la sortie (76) de l'orifice d'échappement (75).

6. Structure d'installation du capteur de température d'eau (77) selon la revendication 1 ou 2,
comprenant en outre un cadre inférieur (14) configuré pour s'étendre d'un tuyau d'amenée (11) vers un côté inférieur d'un véhicule (1), et
dans laquelle une partie terminale (78) du capteur de température d'eau (77) sur un côté d'extrémité distale de celui-ci fait saillie du cadre inférieur (14) en vue de face.

7. Structure d'installation du capteur de température d'eau (77) selon la revendication 1 ou 2,
dans laquelle un thermostat (62) est disposé adjacent à un côté latéral de la sortie (76) de l'orifice d'échappement (75),
dans laquelle un passage de dérivation (72) est prévu en dessous du thermostat (62) et configuré pour renvoyer l'eau de refroidissement au moteur (20) tout en contournant le radiateur (51) lorsque le thermostat (62) est fermé, et
dans laquelle le capteur de température d'eau (77) est disposé en dessous du thermostat (62) à l'emplacement adjacent à la sortie (76) de l'orifice d'échappement (75) en vue de face, et le passage de dérivation (72) est situé entre le capteur de température d'eau (77) et la sortie (76) de l'orifice d'échappement (75).

8. Structure d'installation du capteur de température d'eau (77) selon la revendication 1 ou 2,
dans laquelle un thermostat (62) est disposé adjacent à un côté latéral de la sortie (76) de l'orifice d'échappement (75),
dans laquelle un passage de dérivation (72) est prévu en dessous du thermostat (62) et configuré pour renvoyer l'eau de refroidissement au moteur (20) tout en contournant le radiateur (51) lorsque le thermostat (62) est fermé, et
dans laquelle le capteur de température d'eau (77) est disposé en dessous du thermostat (62) à l'emplacement adjacent à la sortie (76) de l'orifice d'échappement (75) en vue de face, et une entrée de l'eau de refroidissement vers le passage de dérivation (72) est située au-dessus du capteur de température d'eau (77).
